# EUROPEAN PATENT SPECIFICATION

(11) **EP 3 414 202 B1**
(45) Date of publication and mention of the grant of the patent: **07.04.2021**
(21) Application number: 17750797.7
(22) Date of filing: 10.02.2017
(51) Int. Cl.: B66D 1/20, A01G 23/06, A01G 23/095, B27L 1/04, B66D 1/14, B66D 1/26, B66D 1/28, A01G 23/00

(54) **FORESTRY WINCH SYSTEM**
FORSTSEILWINDENSYSTEM
SYSTÈME DE TREUIL FORESTIER

(30) Priority: 12.02.2016 US 201615042582
(43) Date of publication of application: 19.12.2018
(73) Proprietor: GSE Technologies, LLC, Houghton, Michigan 49931 (US)
(72) Inventor: SIMULA, Glen Raymond, Hancock Michigan 49930 (US); MCKINSTRY, David Jon, Calumet Michigan 49913 (US)
(74) Representative: GPI & Associés
(86) International application number: PCT/US2017/017284
(87) International publication number: WO 2017/139520

(56) References cited:
- US-A- 2 671 880
- US-A- 3 985 047
- US-A1- 2006 169 961
- US-A1- 2008 061 277
- US-A1- 2014 341 696
- US-A1- 2014 341 696
- US-B1- 6 213 320

## Description

### TECHNICAL FIELD

### BACKGROUND

### (1) Field of the Invention:

The present disclosure relates to a winch system configured to be coupled to a processor that energizes the winch system, usually in a forestry environment.

### (2) Related Art

Particularly in the lumber business, it is known that there are challenges imposed by remote locations, hard-to-reach job sites, the size and weight of trees to be felled and the movement after felling of heavy, unstable trees and limbs. To meet such challenges, machinery has been developed that deploy tree and limb processors. Examples include equipment made by Waratah, such as the HTH625C harvester head - http://www.waratah.net.

US 2014/341696 discloses a forestry winch system coupled to a processor energy source, according to the preamble of claim 1.

The following patent numbers were considered before filing this patent application: JP 7232899; AU 2010/202945; US 6,705,597; and US 5,386,970. The documents US2671880, US3985047, US2006169961 and US2014341696 were also considered.

### SUMMARY

One embodiment of the present disclosure includes a winch system by which the disclosed method is practiced.

The disclosure also includes a method for ensnaring an object such as a tree limb before it is felled to influence the direction in which it is to fall or after it is felled and pulling it toward a processor that de-limbs or prunes and optionally cuts the limb to length.

The winch system is configured to be coupled to a processor energy source having one or more processor driving rollers, the processor providing energy to the winch system. The winch system has
a body having a front face, a back face, lateral side faces, a top, a bottom, an imaginary horizontal axis extending between the lateral side faces, an imaginary vertical axis extending between the top and the bottom, the body being detachably attachable to the processor energy source;
multiple driven rollers that are driven by the one or more processor driving rollers, the driven rollers being supported between the top and the bottom of the body so that they are rotatable about axes that are parallel to the vertical axis in response to the one or more processor driving rollers;
a winch drum supported by the body and extending between the lateral side faces, the winch drum having an axis of rotation that is parallel to the horizontal axis of the body;
a drum gear in communication with the driven rollers and the winch drum that transfers rotational energy about the vertical axis from the processor driving rollers to rotational energy about the axis of rotation of the winch drum and influences the speed and direction of winch drum rotation, wherein the drum gear includes a pair of sprockets and a chain extending around the pair, the chain being adapted to transfer rotary motion from one socket to the other socket in the pair, the sprockets being aligned along an imaginary angled axis so that one is higher than the other; and a cable that is adapted to wrap around the winch drum, the cable extending from the front or back faces, the cable having a proximal end region attached to the winch drum and a distal end region that is detachably attachable to an object to be retrieved by the winch system.

One way of operating the disclosed apparatus involves these steps:
A. lowering the processor and the pair of driving rollers over the winch system 10;
B. engaging the processor driving rollers with the driven winch drive rollers so that in one embodiment each processor driving roller engages two winch driven rollers;
C. securing the distal end of the cable to or around an object to be pulled; and
D. rotating the processor driving rollers and the driven winch drive rollers and drum to apply tension to and pull in the cable and the ensnared object so that the object may be retrieved or the direction in which it may fall is influenced.

### BRIEF DESCRIPTION OF THE DRAWINGS

FIGURE 1 is a quartering perspective view of a winch system not according to this invention;
FIGURE 2 is a view of the left-hand side of the winch system shown in figure 1, not according to this invention;
FIGURE 3 is a view of the rear of the winch system;
FIGURE 4 is a vertical sectional view of the system shown in figure 1 taken along the line 4 - 4 thereof;
FIGURE 5 is a horizontal sectional view of the system shown in figure 1 taken along the line 5 - 5 thereof;
FIGURE 6 is a quartering perspective view of an alternate embodiment of the winch system ;

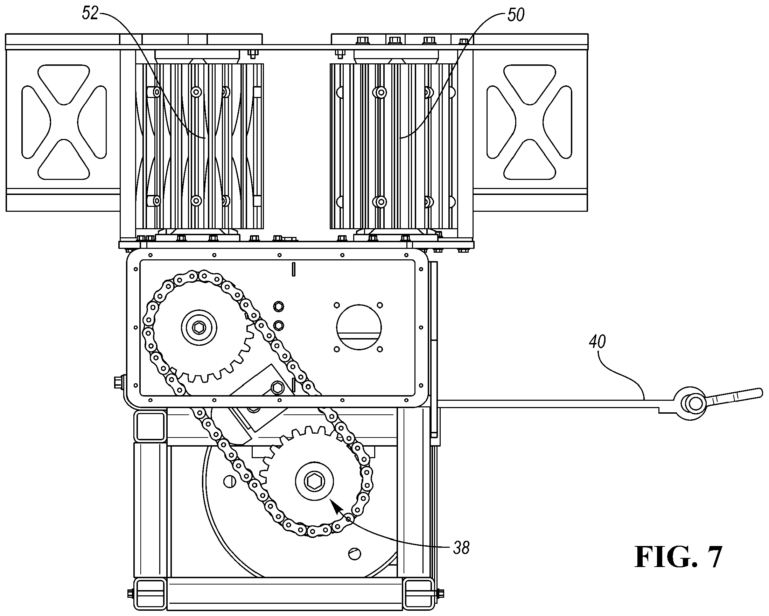

FIGURE 7 is a view of the left-hand side of the winch system shown in figure 6;

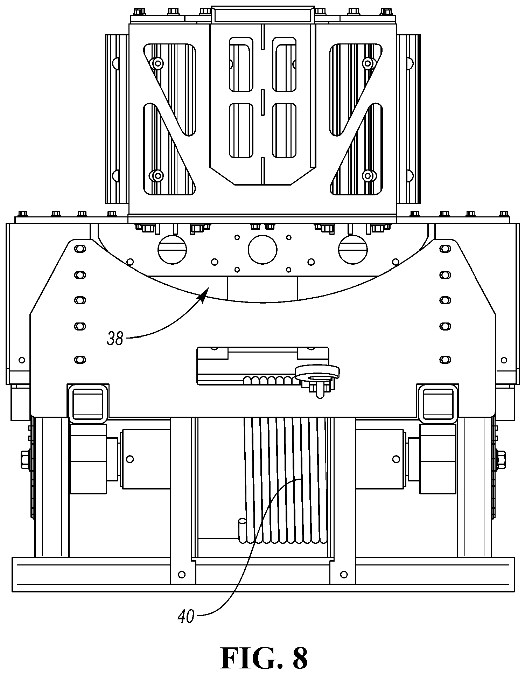

FIGURE 8 is a view of the rear of the winch system shown in figure 6;

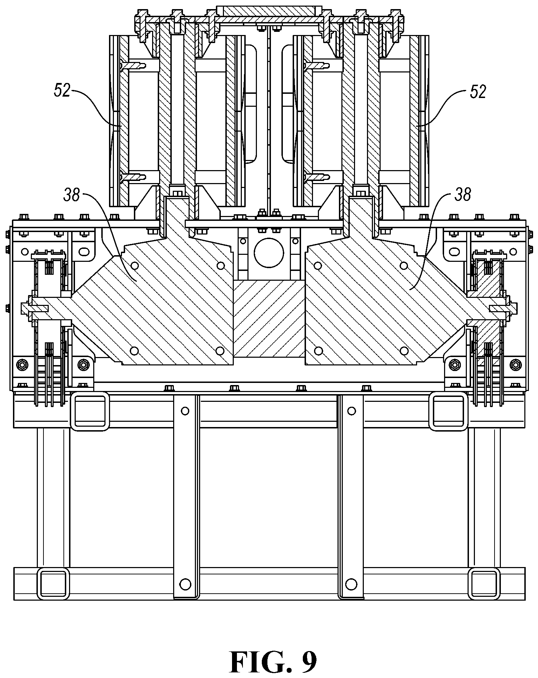

FIGURE 9 is vertical sectional view of the system shown in figure 6 taken along the line 9 - 9 thereof;

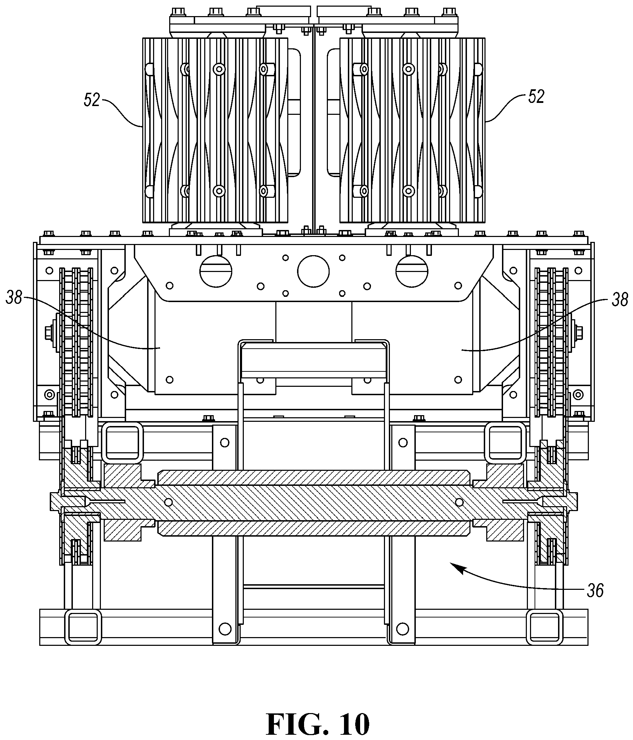

FIGURE 10 is another vertical sectional view of the system shown in figure 6.

### DETAILED DESCRIPTION

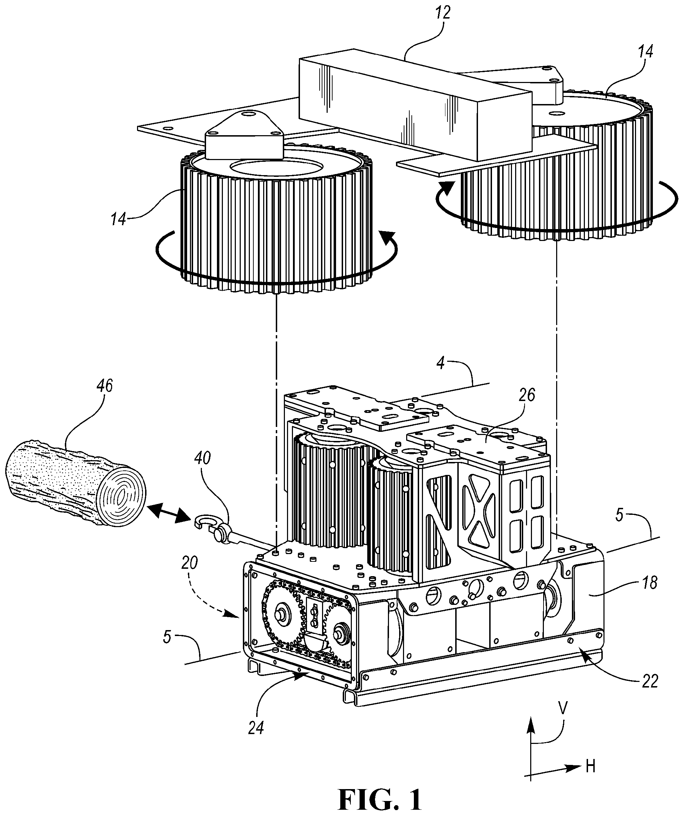

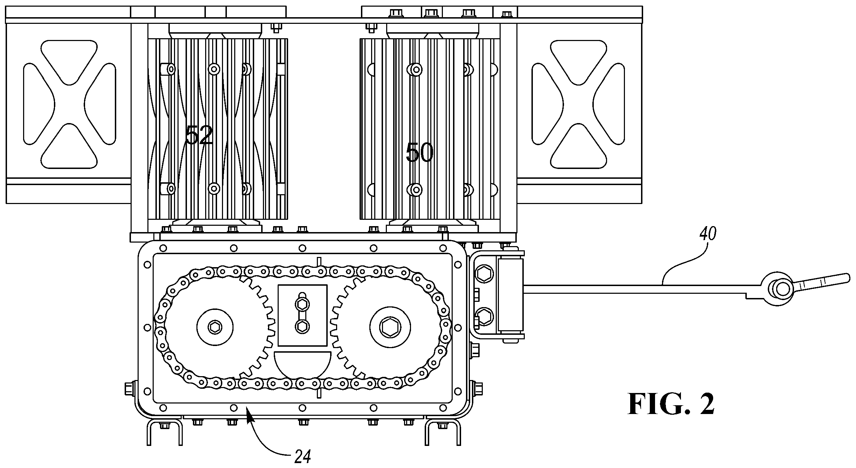

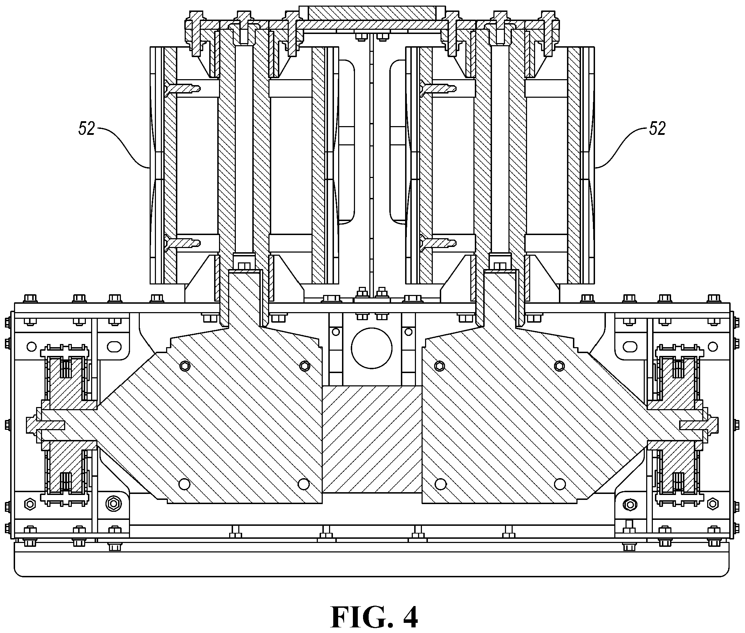

A winch system 10 (Figures 1-5) is coupled to a processor energy source 12 having one or more processor driving rollers 14 and optionally crab claw-like knives 16. The processor 12 provides energy to the winch system 10 through driving rollers 14 that optionally are reversible. The winch system 10 has a body 18 (Figure 1) with a front face 20 (from which optionally a cable 40 extends), a back face 22, lateral sides 24, a top 26, a bottom 28 an imaginary vertical axis (V-V) and an imaginary horizontal axis (H - H). Multiple driven winch drive rollers 50, 52 (preferably two) are supported between the top 26 and bottom 28 so that they are rotatable about axes that are parallel to the vertical axis (V-V) in response to the one or more processor driving rollers 14.

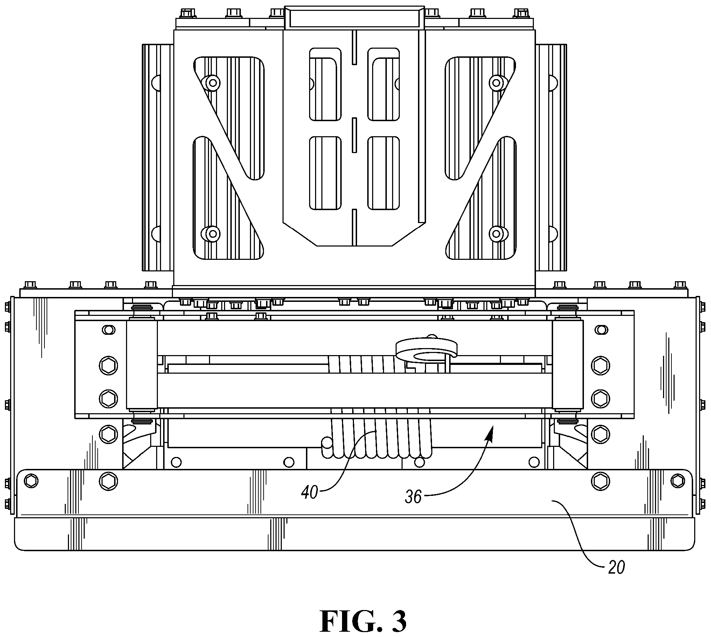

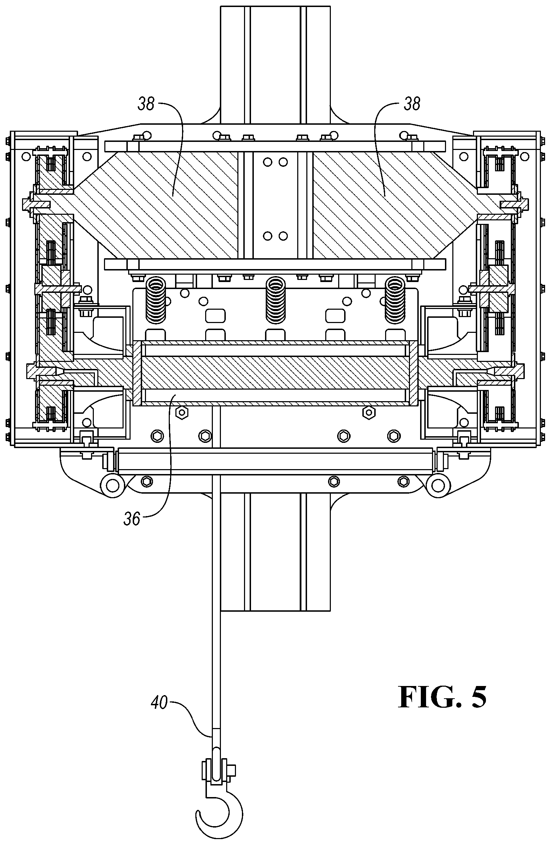

A winch drum 36 (Figures 3 & 5) is supported by the body 18 so that it rotates about an axis that is parallel with the horizontal axis (H - H). Associated with the winch drum 36 is a drum gear 38 in communication with the driven rollers 50,52. The drum gear 38 transfers rotational energy about the vertical axis V - V from the processor driving rollers 14 to rotational energy about the axis of rotation H - H of the winch drum 36 and optionally influences the speed and direction of winch drum rotation. A cable 40 extends from or wraps around the winch drum 36. The cable 40 has a proximal end 42 region attached to the winch drum 36 and a distal end region 44 that is detachably attachable to an object 46 to be retrieved by and pulled or hauled towards the winch system 36. The cable 40 extends outwardly from the front 20 or back 22 faces of the body 18.

It will be appreciated that the term "horizontal" should not be strictly construed. In practice, this term suggests a frame of reference in relation to the body 18 of the winch system. It may be that the environment of use may be inclined to a truly horizontal plane. Similarly for the term "vertical". It also should not be strictly construed, except that the vertical axis should be considered orthogonal to the horizontal axis.

If desired, a reverse gear 48 is mounted so that it rotates with the driven winch drive rollers 50, 52 in a plane that lies perpendicularly to the vertical axis V - V.

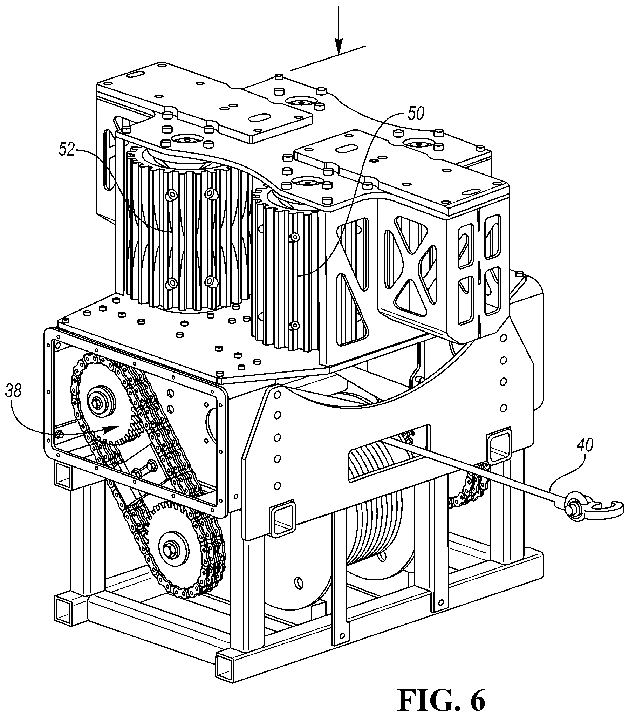

According to the invention (see figure 6 onwards) the drive gear 38 includes two sprockets, a belt or chain (collectively, "chain") that surrounds them, and a gearbox. The sprockets are oriented so that one is higher than the other. In practice, this may facilitate visual inspection by an operator. One form of drum gear 38 is the Superior Gearbox 600 series (preferably the 1:1 ratio box). See, www.superiorgearbox.com.

The processor driving rollers 14 of the processor energy source 12 configured to be coupled to the winch system 10 should include two processor driving rollers 14. Preferably, the one or more driven winch drive rollers 50, 52 of the winch system 10 comprise four rollers.

Where there are four driven rollers, two rollers 50 are mounted adjacent the front face 20 of the winch system 10 and two rollers 52 are mounted adjacent the back face 22 of the winch system 10. In such a case, the reverse gear 48 intermeshes between the front two 50 winch system gears.

Preferably the cable 40 extends from the body 18 between the front two driven rollers 50.

In use, the disclosed apparatus for ensnaring and retrieving objects 46 comprises in combination a winch system 10, as described above and a processor energy source 12 to which the winch system 10 is coupled. The processor energy source 12 has multiple processor driving rollers 14 and some embodiments (not according to this invention) have crab claw-like knives 16.

As used herein the term "winch" connotes a mechanical device that is used to pull in (wind up) or let out (wind out) or otherwise adjust the "tension" of a rope or wire rope (also called a "cable" or "wire cable"). *En.wikipedia.org*/*wiki*/*Winch.* In its simplest form, it consists of a spool and an attached hand crank. The spool can also be called the winch drum. *Id.* Some designs have gear assemblies and can be powered by electric, hydraulic, pneumatic or internal combustion drives. Some may include a solenoid brake and/or a mechanical brake or ratchet and pawl device that prevents it from unwinding unless the pawl is retracted.

Preferably, the cable is wound under tension. In practice, is often helpful that the cable be spooled with a minimum tension of about 10-15% of the working load. The smaller the ratio between the drum diameter and cable diameter, the more tension is needed. An insufficient tension allows the cable to cut down between lower wraps. This tends to cause damage to the cable.

An ideal ratio between the drum diameter and the cable diameter is 25:1 or greater. And ANSI/ASME standard sets a minimum of 15:1 for pulling and 18:1 for lifting. In one set of experiments, the drum diameter was 5 x 25,4 mm (i.e. 5 inches), and the wire diameter was 0.63 x 25,4 mm (i.e. 0.63 inches). In that example, the ratio was 9:1.

Relevant to smooth spooling is the angle (fleet angle) at which the cable comes off the sheave and into the winch. Preferably, the fleet angle should lie between 0.5° and 1.5°. In practice, it is desirable that the winch be mounted so that it shaft is at a 90 degree angle relative to a line that extends from the center of the drum to the first object to be engaged or a sheave. Failure to align the winch will prevent the cable from winding onto the drum as it should.

A common arrangement is for the winch cable to leave the drum and go through a fixed sheave or block. Grooved drums can help the cable spool correctly. For example, a helical groove can be provided to facilitate multi-layer applications that results in additional layers of cable lying at a crosswise angle to the lower layers.

In use, one method for operating the winch system 10 involves the processor 12 descending from above and engaging the winch system 10. After engagement, the winch system 10 is coupled to the movable processor 12.

One embodiment of the processor 12 has a pair of processor driving rollers 14 and openable claw-like knives 16. Via a gearing system, the processor 12 provides rotational, translational and potential energy to the winch system 10. The gearing system rotates, stops or reverses the rotation of a drum 36 around which the cable 40 is wrapped and to which the cable 40 is tethered so that the cable 40 can be extended or retracted without detachment or slippage.

In use, the distal end 58 of the cable is detachably attached to an object 46 to which a pulling force is to be applied. The proximal end 56 is secured to the drum.

One way of operating the disclosed apparatus involves these steps:
A. lowering the processor 12 and the pair of driving rollers 14 over the winch system 10;
B. engaging the processor driving rollers 14 with the driven winch drive rollers 50, 52 so that in one embodiment each processor driving roller 14 engages two winch driven rollers (e.g. 50 or 52);
C. securing the distal end 58 of the cable 40 to or around an object 46 to be pulled;
D. rotating the processor driving rollers 14 and the driven winch drive rollers 50, 52 and drum 36 to apply tension to and pull in the cable 40 and the ensnared object 46 so that the object 46 may be retrieved or the direction in which it may fall is influenced. Other steps may be involved:
E. straddling the object 46 with the claw-like knife 16; and
F. removing unwanted appendages (e.g. limbs) from the object 46 as it is retrieved by the cable 40 and passes through the knife 16.

In one example, the pitch diameter of the driving winch rollers 50, 52 was 11.5 x 25,4 mm (i.e. 11.5 inches); that of the reverse gear 48 was 6 x 25,4 mm (i.e. 6 inches); and that of the drum 38 was 7 x 25,4 mm (i.e. 7 inches). It was observed that the torque on each driven winch drive roller was about 940 x 0,453592 kg (i.e. 940 LBS) and the resulting torque on the drum was about 2200 x 1.36 Newton-meters (i.e. 2200 foot pound) foot pounds. When the driven winch drive rollers rotated at about 21 rpm, this resulted in the drum rotating at about 34.6 rpm and the energy transferred was about 14.3 horsepower.

In practice, the processor driving rollers 14 are preferably hydraulically driven. When a log is inserted between the rollers 14, it is propelled through the knives. Optionally, the limb can also be cut.

In another embodiment, there are two driven rollers 50, 52 which will provide power to the winch drive 36. This embodiment eliminates the cost of the two additional rollers plus the associated gears.

A further embodiment uses a single processor driving roller located at the bottom of the processor 12 that would drive a single gear 50 or 52 which would drive the winch drive hub 36.

A yet further embodiment would use a single processor driving hub to drive a hydraulic motor. Then a hydraulic hose could be routed from the hydraulic motor to the driving hub to provide power to the winch 36. This hydraulic mechanism would allow the drive winch 36 to be positioned in alternate locations and a hydraulic hose to be connected to it instead of gears.

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention, as defined by the attached claims.

| **Reference No.** | **Component** |
|---|---|
| 10 | Winch system |
| 12 | Processor energy source |
| 14 | Processor driving rollers |
| 16 | Crab claw-like knives |
| 18 | Body |
| 20 | Front face |
| 22 | Back face |
| 24 | Lateral sides |
| 26 | Top |
| 28 | Bottom |
| A-A | Imaginary vertical axis |
| 36 | Winch drum |
| 38 | Drum gear |
| 40 | Cable |
| 42 | Proximal end region |
| 44 | Distal end region |
| 46 | Object to be retrieved |
| 48 | Reverse gear |
| 50 | Two rollers mounted adjacent the front face (Driven winch drive rollers) |
| 52 | Two rollers mounted adjacent the back face (Driven winch drive rollers) |
| 56 | Proximal end |
| 58 | Distal end |

## Claims

1. A winch system (10) configured to be coupled to a processor energy source (12) and having multiple processor driving rollers (14), the processor energy source (12) providing energy to the winch system, the winch system (10) comprising:
a body (18) having a front face (20), a back face (22), lateral side faces (24), a top (26), a bottom (28), an imaginary horizontal axis extending between the lateral side faces, an imaginary vertical (A-A) axis extending between the top and the bottom, the body (18) being detachably attachable to the processor energy source (12);
multiple driven rollers (50, 52) that are configured to be driven by the processor driving rollers (14), the driven rollers (50, 52) being supported between the top and the bottom of the body (18) so that they are rotatable about axes that are parallel to the vertical axis (A-A) in response to the processor driving rollers (14); a winch drum (36) supported by the body (18) and extending between the lateral side faces;
a drum gear (38) in communication with the driven rollers (50, 52) and the winch drum (36) which is configured to transfer rotational energy about the vertical axis from the processor driving rollers (14) to transfer rotational energy about the axis of rotation of the winch drum (36) and influences the speed and direction of rotation of the winch drum (36), and
a cable (40) that is adapted to wrap around the winch drum (36), the cable (40) extending from the front or back faces, the cable (40) having a proximal end region attached to the winch drum (36) and a region of a distal end (58) that is detachably attachable to an object (46) to be retrieved by the winch system (10), **characterized in that** the winch drum has an axis of rotation that is parallel to the horizontal axis of the body; and wherein the drum gear includes a pair of sprockets and a chain extending around the pair, the chain being adapted to transfer rotary motion from one sprocket to the other sprocket in the pair, the sprockets being aligned horizontally, vertically or along an imaginary angled axis so that one is higher than the other.

2. The winch system (10) as per claim 1, wherein the multiple driven rollers of the winch system (10) comprise four rollers.

3. The winch system of claim 2, wherein the four rollers include two rollers (50) mounted adjacent the front face of the winch system (10) and two rollers (52) mounted adjacent the back face of the winch system (10).

4. The winch system of claim 3, wherein a reverse gear (48) is mounted so that it rotates two of the driven rollers in a plane that lies perpendicularly to the vertical axis (A-A), the reverse gear (48) intermeshing between a front and a back roller (50, 52).

5. The winch system of claim 4, wherein the cable (40) extends from the body (18) between the front two driven rollers.

6. The winch system of claim 4, wherein the cable (40) extends from the body (18) between the back two driven rollers.

7. A machine for ensnaring objects (46), the machine being **characterized in that** it comprises a winch system (10) as per at least one of claims 1-6 and a processor energy source (12) to which the winch system (10) is coupled, the processor energy source (12) having multiple processor driving rollers (14), the processor providing energy (12) to the winch system (10).

8. A method for operating a winch system (10) as per at least one of claims 1-6, **characterized in that** the method includes the steps of:
A. lowering the processor and the one or more driving processor rollers over the winch system (10);
B. engaging the driving processor rollers with the driven winch rollers so that each processor driving roller engages one or more winch driven rollers;
C. securing the distal end of the cable (40) to the object (46) to be engaged;
D. rotating the processor driving rollers (14) and the driven winch rollers to apply tension to the cable (40) and the object (46) so that the object (46) may be pulled or retrieved.

9. The method of operating a winch system (10) as per claim 8, further comprising the step of:
E. straddling the object (46) with blades that comprise an openable and closable claw-like knife.

## Patentansprüche

1. Windensystem (10), das konfiguriert ist, um mit einer Prozessor-Energiequelle (12) gekoppelt zu werden, und das mehrere Prozessor-Antriebsrollen (14) aufweist, wobei die Prozessor-Energiequelle (12) dem Windensystem Energie zuführt, wobei das Windensystem (10) umfasst:
ein Gehäuse (18) mit einer Vorderseite (20), einer Rückseite (22), seitlichen Seitenflächen (24), einer Oberseite (26), einer Unterseite (28), einer imaginären horizontalen Achse, die sich zwischen den seitlichen Seitenflächen erstreckt, einer imaginären vertikalen (A-A) Achse, die sich zwischen der Oberseite und der Unterseite erstreckt, wobei das Gehäuse (18) abnehmbar an der Prozessor-Energiequelle (12) befestigbar ist;
mehrere angetriebene Rollen (50, 52), die konfiguriert sind, um von den Prozessor-Antriebsrollen (14) angetrieben zu werden, wobei die angetriebenen Rollen (50, 52) zwischen der Oberseite und der Unterseite des Gehäuses (18) gelagert sind, so dass sie in Reaktion auf die Prozessor-Antriebsrollen (14) um Achsen drehbar sind, die parallel zu der vertikalen Achse (A-A) sind;
eine von dem Gehäuse (18) getragene Windentrommel (36), die sich zwischen den seitlichen Seitenflächen erstreckt;
ein Trommelgetriebe (38) in Verbindung mit den angetriebenen Rollen (50, 52) und der Windentrommel (36), das konfiguriert ist, um Rotationsenergie um die vertikale Achse von den Prozessor-Antriebsrollen (14) zu übertragen, um Rotationsenergie um die Drehachse der Windentrommel (36) zu übertragen und die Geschwindigkeit und Richtung der Drehung der Windentrommel (36) zu beeinflussen; und
ein Seil (40), das eingerichtet ist, sich um die Windentrommel (36) zu wickeln, wobei sich das Seil (40) von der Vorder- oder der Rückseite aus erstreckt, wobei das Seil (40) einen proximalen Endbereich, der an der Windentrommel (36) befestigt ist, und einen Bereich eines distalen Endes (58) aufweist, der lösbar an einem durch das Windensystem (10) einzuholenden Gegenstand (46) befestigbar ist, **dadurch gekennzeichnet, dass** die Windentrommel eine Drehachse aufweist, die parallel zu der horizontalen Achse des Gehäuses ist und dass das Trommelgetriebe ein Paar von Kettenrädern und eine sich um das Paar erstreckende Kette umfasst, wobei die Kette eingerichtet ist, um eine Drehbewegung von einem Kettenrad des Paars auf das andere Kettenrad zu übertragen, wobei die Kettenräder horizontal, vertikal oder entlang einer imaginären Winkelachse ausgerichtet sind, so dass eines höher als das andere ist.

2. Windensystem (10) nach Anspruch 1, bei dem die mehreren angetriebenen Rollen des Windensystems (10) vier Rollen umfassen.

3. Windensystem nach Anspruch 2, bei dem die vier Rollen zwei Rollen (50), die angrenzend an die Vorderseite des Windensystems (10) montiert sind, und zwei Rollen (52), die angrenzend an die Rückseite des Windensystems (10) montiert sind, umfassen.

4. Windensystem nach Anspruch 3, bei dem ein Umkehrgetriebe (48) so angebracht ist, dass es zwei der angetriebenen Rollen in einer Ebene dreht, die senkrecht zur vertikalen Achse (A-A) liegt, wobei das Umkehrgetriebe (48) zwischen einer vorderen und einer hinteren Rolle (50, 52) kämmt.

5. Windensystem nach Anspruch 4, bei dem sich das Seil (40) vom Gehäuse (18) zwischen den beiden vorderen angetriebenen Rollen erstreckt.

6. Windensystem nach Anspruch 4, wobei sich das Seil (40) vom Gehäuse (18) zwischen den beiden hinteren angetriebenen Rollen erstreckt.

7. Maschine zum Einfangen von Gegenständen (46), wobei die Maschine **dadurch gekennzeichnet ist, dass** sie ein Windensystem (10) nach mindestens einem der Ansprüche 1-6 und eine Prozessor-Energiequelle (12) umfasst, mit der das Windensystem (10) gekoppelt ist, wobei die Prozessor-Energiequelle (12) mehrere Prozessor-Antriebsrollen (14) aufweist, wobei der Prozessor (12) dem Windensystem (10) Energie zuführt.

8. Verfahren zum Betreiben eines Windensystems (10) nach mindestens einem der Ansprüche 1-6, **dadurch gekennzeichnet, dass** das Verfahren die folgenden Schritte umfasst:
A. Absenken des Prozessors und der ein oder mehreren antreibenden Prozessorrollen über das Windensystem (10);
B. Ineingriffbringen der antreibenden Prozessorrollen mit den angetriebenen Windenrollen, so dass jede Prozessor-Antriebsrolle in eine oder mehrere angetriebene Windenrollen eingreift;
C. Befestigen des distalen Endes des Seils (40) an dem zu greifenden Gegenstand (46);
D. Drehen der Prozessor-Antriebsrollen (14) und der angetriebenen Windenrollen, um Spannung auf das Seil (40) und den Gegenstand (46) auszuüben, so dass der Gegenstand (46) gezogen oder eingeholt werden kann.

9. Verfahren zum Betreiben eines Windensystems (10) nach Anspruch 8, das ferner den folgenden Schritt umfasst:
E. Greifen des Objekts (46) mit Klingen, die ein zu öffnendes und zu schließendes klauenartiges Messer umfassen.

## Revendications

1. Système de treuil (10) configuré pour être couplé à une source d'énergie d'une ébrancheuse-tronçonneuse (12) et ayant une pluralité de rouleaux d'entraînement de l'ébrancheuse-tronçonneuse (14), la source d'énergie de l'ébrancheuse-tronçonneuse (12) fournissant de l'énergie au système de treuil, le système de treuil (10) comprenant :
un corps (18) ayant une face avant (20), une face arrière (22), des faces latérales (24), un sommet (26), une embase (28), un axe horizontal imaginaire s'étendant entre les faces latérales, un axe vertical imaginaire (A-A) s'étendant entre le sommet et l'embase, le corps (18) pouvant être fixé de manière amovible à la source d'énergie de l'ébrancheuse-tronçonneuse (12) ;
de multiples rouleaux entraînés (50, 52) qui sont configurés pour être entraînés par les rouleaux d'entraînement de l'ébrancheuse-tronçonneuse (14), les rouleaux entraînés (50, 52) étant supportés entre le sommet et l'embase du corps (18) de sorte qu'ils peuvent tourner autour d'axes qui sont parallèles à l'axe vertical (A-A) en réponse aux rouleaux d'entraînement de l'ébrancheuse-tronçonneuse (14) ;
un tambour de treuil (36) supporté par le corps (18) et s'étendant entre les faces latérales ;
un engrenage de tambour (38) en communication avec les rouleaux entraînés (50, 52) et le tambour de treuil (36) qui est configuré pour transmettre une dynamique de pivotement à l'axe vertical des rouleaux d'entraînement de l'ébrancheuse-tronçonneuse (14), afin de transmettre une dynamique de pivotement à l'axe de rotation du tambour de treuil (36) et d'influencer les vitesse et direction de rotation du tambour de treuil (36) ; et
un câble (40) qui est adapté pour s'enrouler autour du tambour de treuil (36), le câble (40) s'étendant depuis les faces avant ou arrière, le câble (40) ayant une zone d'extrémité proximale fixée au tambour de treuil (36) et une zone d'une extrémité distale (58) qui peut être fixée de manière amovible à un objet (46) devant être récupéré par le système de treuil (10),
**caractérisée en ce que** le tambour de treuil comporte un axe de rotation qui est parallèle à l'axe horizontal du treuil corps ; et dans lequel l'engrenage de tambour comprend une paire de pignons et une chaîne s'étendant autour de ladite paire, la chaîne étant adaptée pour transmettre un mouvement de rotation depuis un pignon vers l'autre pignon de la paire, les pignons étant alignés horizontalement, verticalement ou le long d'un axe incliné imaginaire de sorte que l'un est disposé à une élévation supérieure à celle de l'autre.

2. Système de treuil (10) selon la revendication 1, dans lequel la pluralité de rouleaux entraînés du système de treuil (10) comprend quatre rouleaux.

3. Système de treuil selon la revendication 2, dans lequel les quatre rouleaux comprennent deux rouleaux (50) montés adjacents à la face avant du système de treuil (10) et deux rouleaux (52) montés adjacents à la face arrière du système de treuil (10).

4. Système de treuil selon la revendication 3, dans lequel un engrenage de marche arrière (48) est monté de manière à faire tourner deux des rouleaux entraînés dans un plan qui s'étend perpendiculairement par rapport à l'axe vertical (AA), l'engrenage de marche arrière (48) venant en prise entre un rouleau avant et un rouleau arrière (50, 52).

5. Système de treuil selon la revendication 4, dans lequel le câble (40) s'étend à partir du corps (18) entre les deux rouleaux entraînés avants.

6. Système de treuil selon la revendication 4, dans lequel le câble (40) s'étend à partir du corps (18) entre les deux rouleaux entraînés arrière.

7. Machine pour prendre au piège des objets (46), la machine étant **caractérisée en ce qu'**elle comprend un système de treuil (10) selon au moins l'une des revendications 1 à 6 et une source d'énergie de l'ébrancheuse-tronçonneuse (12) à laquelle le système de treuil (10) est couplé, la source d'énergie de l'ébrancheuse-tronçonneuse (12) ayant de multiples rouleaux d'entraînement de l'ébrancheuse-tronçonneuse (14), la source de l'ébrancheuse-tronçonneuse fournissant de l'énergie (12) au système de treuil (10).

8. Procédé pour faire fonctionner un système de treuil (10) selon au moins l'une des revendications 1 à 6, **caractérisé en ce que** le procédé comprend les étapes consistant à :
A. abaisser l'ébrancheuse-tronçonneuse et les un ou plusieurs rouleaux de l'ébrancheuse-tronçonneuse d'entraînement sur le système de treuil (10) ;
B. mettre en prise les rouleaux de l'ébrancheuse-tronçonneuse d'entraînement avec les rouleaux de treuil entraînés de sorte que chaque rouleau d'entraînement de l'ébrancheuse-tronçonneuse vient en prise avec un ou plusieurs rouleaux entraînés de treuil ;
C. fixer l'extrémité distale du câble (40) à l'objet (46) devant être mis en prise ;
D. faire tourner les rouleaux d'entraînement de l'ébrancheuse-tronçonneuse (14) et les rouleaux de treuil entraînés pour appliquer une tension au câble (40) et à l'objet (46) de sorte que l'objet (46) puisse être tiré ou récupéré.

9. Procédé pour faire fonctionner un système de treuil (10) selon la revendication 8, comprenant en outre l'étape prévoyant :
E. amener l'objet (46) à être chevauché par des lames qui comprennent un couteau en forme de griffe pouvant être ouvert et fermé.
